# EUROPÄISCHE PATENTSCHRIFT

(11) **EP 1 820 593 B1**
(45) Veröffentlichungstag und Bekanntmachung des Hinweises auf die Patenterteilung: **14.07.2010**
(21) Anmeldenummer: 06003121.8
(22) Anmeldetag: 16.02.2006
(51) Int. Cl.: B23H 7/26

(54) **Haltevorrichtung für eine Werkzeugmaschine**
Chucking device for machine tool
Système de fixation pour machine outil

(43) Veröffentlichungstag der Anmeldung: 22.08.2007
(73) Patentinhaber: Neupert, Jochen, 78652 Deisslingen (DE)
(72) Erfinder: Neupert, Jochen, 78652 Deisslingen (DE)
(74) Vertreter: Patentanwälte Westphal, Mussgnug & Partner

(56) Entgegenhaltungen:
- WO-A-00/53361
- US-B1- 6 403 912

## Beschreibung

Die Erfindung bezieht sich auf eine Haltevorrichtung, die in eine Werkzeugmaschine einbaubar und durch die eine Elektrode zum Erodieren von metallischen Werkstücken an der Werkzeugmaschine arretierbar ist.

Eine solche Haltevorrichtung ist z. B. aus WO 00/53361 A bekannt.

Die von der Elektrode erodierten Werkstücke dienen als Angussformteile für die Kunststoffspritzgusstechnik. Üblicherweise werden durch solche Angussformteile Kunststoffbauteile hergestellt, die aus ein oder mehreren unterschiedlichen Kunststoffmaterialien bestehen, beispielweise Kunststoffschalter, die eine weiche Schaltmembran und ein die Schaltmembran haltendes Kunststoffgehäuse aufweisen.

Zur Fertigung der metallischen Werkstücke wird die Elektrode in eine Werkzeughalterung eingesetzt und durch ein Halteglied in dieser fixiert. Aufgrund der durch die Erodierung entstehenden hohen Beanspruchung besitzt die Elektrode eine sehr geringe Lebensdauer. Folglich kann mit einer Elektrode lediglich eine begrenzte Anzahl von Werkstücken bearbeitet werden. Dies bedeutet, dass die Elektrode oftmals an der Werkzeugmaschine ausgewechselt werden muss. Die Elektrode wird dabei in die Durchgangsbohrung eingeschoben, und zwar bis der Schaft der Elektrode die längs verlaufende Bohrung, aus der das Halteglied ragt, überfahren hat. Anschließend wird das Halteglied eingeschraubt, durch das die Elektrode in der Durchgangsbohrung arretiert ist.

Als nachteilig hat sich herausgestellt, dass durch den Austausch der Elektrode jedes Mal eine neue Kalibrierung der Werkzeugmaschine vorzunehmen ist, denn die Position der Elektrode in der Haltevorrichtung, die der Werkzeugmaschine zugeordnet ist, unterscheidet sich von der Position der Elektrode, die ausgetauscht wurde.

Eine solche Neuausrichtung der Werkzeugmaschine ist zeitaufwendig und daher kostenintensiv. Darüber hinaus entstehen Abweichungen zwischen den Chargen der Werkstücke, die mit unterschiedlichen Elektroden bearbeitet wurden. Bei dem Kunststoffspritzgussverfahren ist es jedoch unbedingt erforderlich, dass die Angussformen, also die metallischen Werkstücke, möglichst baugleich sind, so dass die Position des Kunststoffeingusskanals für jedes Werkstück identisch sein sollte. Somit sind an die Ausrichtung der Werkzeugmaschine hohe Anforderungen zu stellen, um eine möglichst identische baugleiche Ausbildung der Angussformen zu erzielen.

Es ist daher Aufgabe der Erfindung eine Haltevorrichtung der eingangs genannten Gattung derart weiterzubilden, dass mittels dieser eine positionsgenaue Ausrichtung der Elektrode in der Haltevorrichtung möglich ist, so dass nach jedem Wechselvorgang jede in die Haltevorrichtung eingesetzte Elektrode positionsgleich ausgerichtet ist.

Diese Aufgabe wird durch eine Haltevorrichtung mit den Merkmalen des Anspruchs 1 gelöst.

Die Erfindung beruht also im Wesentlichen darauf, eine Werkzeughülse als Werkzeughalterung einzusetzen. Dabei ist an die Werkzeughülse auf der dem zu bearbeitenden Werkstück zugewandten Seite im Bereich der Durchgangsbohrung eine plane Anlagefläche angearbeitet. An dieser liegt im montierten Zustand der Elektrode eine an dieser vorgesehene durch einen Bund oder Ansätze gebildete Anschlagfläche an. Der Schaft der Elektrode ist mit einer in Richtung des Halteglieds geneigt verlaufenden Druckfläche versehen, auf die das Halteglied zur Verspannung der Elektrode in der Werkzeughülse einwirkt.

Weiter vorteilhafte Weiterbildungen der Erfindung ergeben sich aus den Unteransprüchen.

Dadurch, dass an der Werkzeughülse die plane Anlagefläche angearbeitet ist und daran die an der Elektrode vorgesehene Anschlagfläche anliegt, kann die Elektrode exakt definiert in der Haltevorrichtung positioniert werden, denn wenn jede Elektrode exakt baugleich ausgebildet ist, ragt jede Elektrode in exakt gleicher Weise aus der Haltevorrichtung. Mittels dieser konstruktiven Gegebenheit ist es möglich, die Werkzeugmaschine derart zu programmieren, dass durch das Wechseln der Elektrode eine erneute Kalibrierung der Werkzeugmaschine bezogen auf das zu bearbeitende Werkstück nicht geführt werden muss, denn die Position der neu eingesetzten Elektrode entspricht in exakt gleicher Weise der Position der vorherigen in die Haltevorrichtung eingesetzten Elektrode. Demnach entfällt beim Wechseln der Elektrode die Kalibrierung der Werkzeugmaschine, wodurch Zeit eingespart werden kann.

Wenn das Halteglied als Kugelraste ausgebildet ist, die auf die Druckfläche, die in die Elektrode eingearbeitet ist, einwirkt, entsteht eine Schnellspanneinrichtung, mittels der die Elektrode manuell in die Haltevorrichtung einsetzbar ist. Das Austauschen der Elektrode sowie das Neueinsetzen einer unbenutzten Elektrode kann daher auf einfache und schnelle Art und Weise bewerkstelligt werden. Gleichzeitig ist sichergestellt, dass der Sitz der Elektrode in der Haltevorrichtung exakt dem Sitz der Vorgängerelektrode entspricht, denn die geometrischen Abmessungen an den Elektroden sind identisch. Die Anschlagfläche der Elektrode und die in diese eingearbeitete Druckfläche entspricht dabei dem geometrischen Abstand zwischen Mittelachse des Halteglieds und der planen Anlagefläche der Werkzeughülse.

Durch die von dem Halteglied auf die Druckfläche der Elektrode ausgeübten Radialkraft entsteht eine axial wirkende Zugkraft, durch die die Anschlagfläche der Elektrode an die Anlagefläche der Werkzeughülse gepresst wird und daher an dieser bündig und spielfrei anliegt. Die Elektrode wird also fest in der Haltevorrichtung gehalten.

In der Zeichnung ist ein erfindungsgemäßes Ausführungsbeispiel dargestellt, das nachfolgend näher erläutert wird. Im einzelnen zeigt:
- Figur 1: eine Haltevorrichtung, die in einem Gehäusearm einer Werkzeugmaschine einsetzbar ist, mit einer Werkzeughülse, in die eine Elektrode und ein diese in der Werkzeughülse fixierende Halteglied einsteckbar ist, sowie eine erste Einstellungsvariante zur Ausrichtung der Elektroden, in Explosionsdarstellung,
- Figur 2: die Haltevorrichtung gemäß Figur 1 im zusammengebauten Zustand entlang der Schnittlinie 11-11,
- Figur 3: die Haltevorrichtung gemäß Figur 1 entlang der Schnittlinie 111-111 und
- Figur 4: eine zweite stufenlose Einstellungsvariante der Haltevorrichtung gemäß Figur 1 entlang einer Kurvenbahn

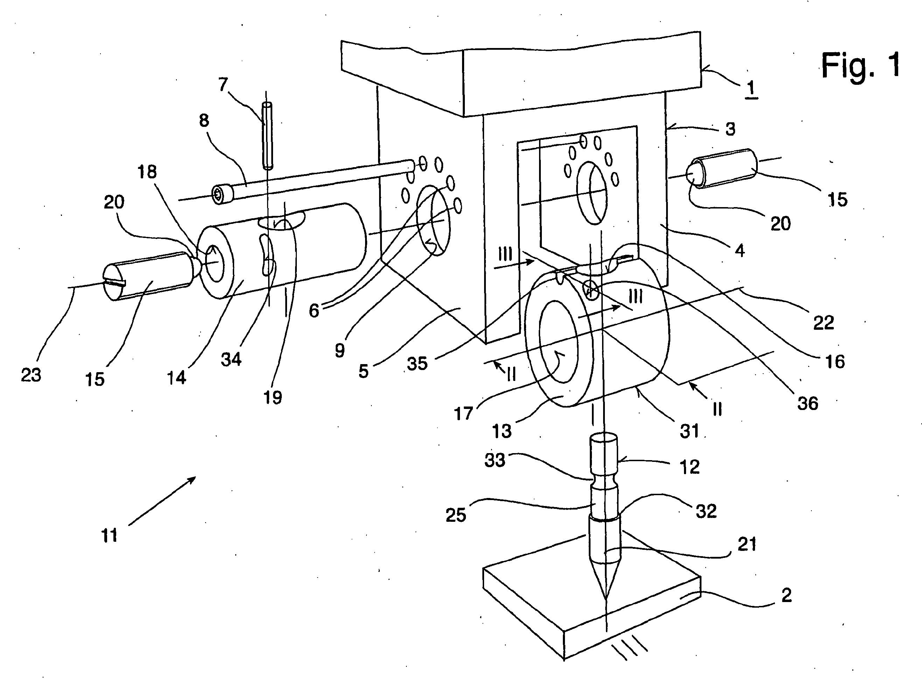

In Figur 1 ist eine Haltevorrichtung 11 gezeigt, die in eine Werkzeugmaschine 1 einbaubar und durch die eine Elektrode 12 zum Erodieren eines metallischen Werkstückes 2 an der Werkzeugmaschine 1 arretierbar ist.

Das metallische Werkstück 2 soll in einem nachfolgenden Kunststoffspritzgussverfahren als Angussform dienen. Durch die Bearbeitung des Werkstückes 2 mittels der Elektrode 12 entsteht demnach in diesem ein Kanal, durch den während des Spritzgussgießvorganges das flüssige Kunststoff in die Formteile eingespritzt ist.

Die schematisch dargestellte Werkzeugmaschine 1 weist einen Gehäusearm 3 auf, der aus zwei parallel zueinander verlaufenden Schenkeln 4 und 5 gebildet ist.

In die Schenkel 4 und 5 sind fluchtend zueinander sechs Bohrungen 6 eingearbeitet, die auf einer gemeinsamen Kreisbahn angeordnet sind. Zwischen den beiden Schenkel 4 und 5 des Gehäusearmes 3 wird die Haltevorrichtung 11 eingesetzt und ist drehbar zwischen den Schenkeln 4 und 5 zur Ausrichtung der Elektrode 12 in einer vorgegebenen Winkelstellung gehalten.

Die Haltevorrichtung 11 besteht aus einer Werkzeughülse 13, einer Fixierhülse 14 und zwei Haltegliedern 15, die, wie dies nachfolgend näher erläutert wird, derart zusammengebaut sind, dass durch diese die Elektrode 12 in der Werkzeughülse 13 positionsgenau abgestützt ist.

Die Werkzeughülse 13 weist eine Durchgangsbohrung 16 auf, die senkrecht zu der Längsachse 22 der Werkzeughülse 13 verläuft, in die die Elektrode 12 einführbar ist. Die Innenkontur der Durchgangsbohrung 16 entspricht dabei dem Durchmesser des Schaftes 25 der Elektrode 12. Senkrecht zu der Durchgangsbohrung 16, also parallel zu der Längsachse 22, ist in die Werkzeughülse 13 eine Bohrung 17 eingearbeitet.

In die Bohrung 17 der Werkzeughülse 13 ist die Fixierhülse 14 drehbar eingesteckt. Die freien Enden der Fixierhülse 14 ragen aus der Werkzeughülse 13 heraus und sind in den beiden Schenkeln 4 und 5 des Gehäusearmes 3 drehbar gehalten.

In die Fixierhülse 14 ist eine Durchgangsbohrung 18 eingearbeitet, die parallel und fluchtend zu der Längsachse 22 der Werkzeughülse 13 ausgerichtet ist. In der Durchgangsbohrung 18 ist ein Gewinde vorgesehen, in das die beiden Halteglieder 15 eingeschraubt werden. Des Weiteren weist die Fixierhülse 14 eine Bohrung 19 auf, die fluchtend zu der Längsachse 21 der Elektrode 12 verläuft und die in Deckung mit der Durchgangsbohrung 16 der Werkzeughülse 13 ausgerichtet ist. Somit kann die Elektrode 12 ungehindert in die Werkzeughülse 13 eingeschoben werden.

Das Halteglied 15 weist jeweils an einem freien in die Bohrung 19 bzw. 17 der Werkzeughülse 13 bzw. der Fixierhülse 14 ragendes Ende eine Kugelraste auf, die aus einer Kugel 20 und aus einer in dem Halteglied 15 integrierten Feder 24 besteht. Die Feder 24 übt demnach eine Federkraft auf die Kugel 20 aus, durch die diese in Richtung der Elektrode 12 gedrückt wird.

An der Werkzeughülse 13 ist eine in Richtung des Werkstückes 2 weisende plane Anlagefläche 31 angearbeitet, die im Bereich der Durchgangsbohrung 16 vorgesehen ist.

An der Elektrode 12 ist eine ringförmige radial verlaufende Anschlagfläche 32 vorgesehen. Des Weiteren ist in den Schaft 25 der Elektrode 12 eine Druckfläche eingearbeitet, die in Richtung des Haltegliedes 15 von innen nach außen bezogen auf die Elektrode 12 geneigt ist.

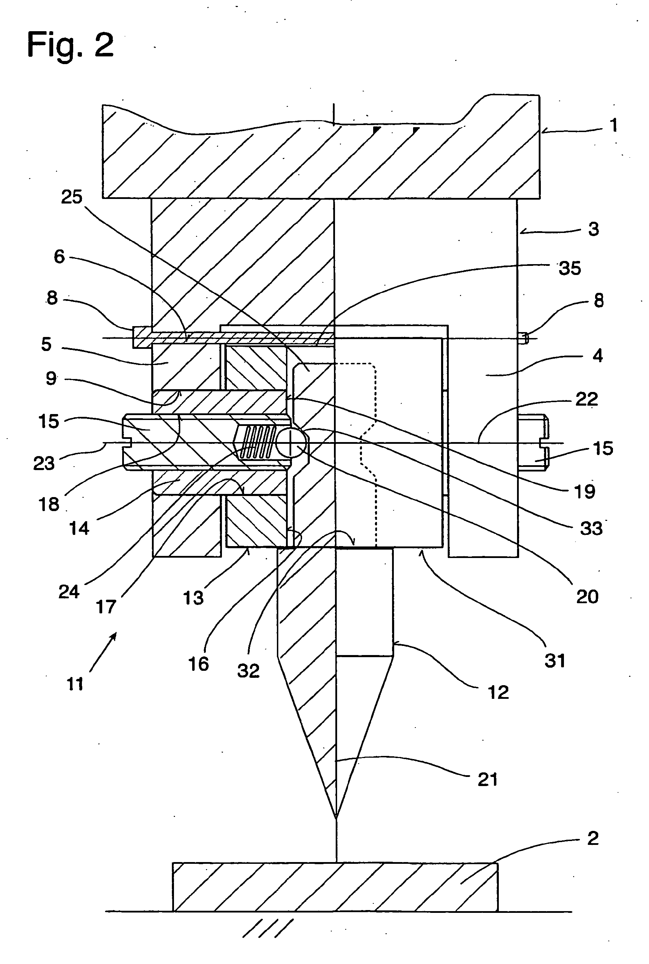

Aus Figur 2 ist der Einbau der Elektrode 12 in die Werkzeughülse 13 ersichtlich. Die Elektrode 12 wird in die Durchgangsbohrung 16 eingeschoben. Die Halteglieder 15 sind in die Gewindebohrungen 18 der Fixierhülse 14 eingeschraubt und ragen mit der jeweiligen Kugel 20 in die Durchgangsbohrung 16 der Werkzeughülse. Der Schaft 25 der Elektrode 12 drückt die beiden diametral gegenüberliegenden Kugeln 20 der Halteglieder 15 auseinander. Die Elektrode 12 kann folglich bis zur Anschlagfläche 32 in die Durchgangsbohrung 16 der Werkzeughülse 13 eingeschoben werden.

Dadurch, dass die Druckfläche 33 im Bereich der Halteglieder 15 angeordnet ist, übt die Feder 24 über die Kugel 20 eine radial gerichtete Kraft auf die Druckfläche 33 aus, die durch diese in eine axial gerichtete Zugkraft, die in Richtung der Werkzeugmaschine 1 verläuft, umgewandelt wird. Somit liegt die Anschlagfläche 32 der Elektrode 12 spielfrei an der Anlagefläche 31 der Werkzeughülse 13 an und die Elektrode 12 wird in der Werkzeughülse 13 durch-die beiden Halteglieder 15 in einer exakt vorbestimmbaren Position arretiert. Die Kugelraste der beiden Halteglieder 15 stellen demnach eine Schnellspanneinrichtung dar.

Die freien Enden der Fixierhülse 14 sind in zwei fluchtend gegenüberliegenden Öffnungen 9, die in die Schenkel 4 und 5 des Gehäusearmes 3 eingearbeitet sind, drehbar gehalten, so dass die Winkelstellung der Werkzeughülse 13 und somit der Elektrode 12 nach bestimmten Vorgaben relativ zu der Werkzeugmaschine 1 ausgerichtet werden kann. Zur Arretierung der derart ausgewählten Winkelstellung der Elektrode 12 ist in die Werkzeughülse 13 eine Nut 35 eingearbeitet, die auf der dem der Elektrode 12 gegenüberliegenden Seite vorgesehen ist. Die Nut 35 wird somit in fluchtende Position zu jeweils zwei der Bohrungen 6, die in jedem Schenkel 4 und 5 eingearbeitet sind, gebracht. Zur Arretierung der Winkelstellung der Werkzeughülse 3 werden durch die ausgewählten Bohrungen 6 ein Fixierstift 8 eingeschoben, der in die Nut 35 verläuft und die beiden gegenüberliegenden Bohrungen 6 durchgreift. Demnach ist die Werkzeughülse 13 und damit die Elektrode 12 in einer bestimmten Winkelposition durch den Fixierstift 8 an der Werkzeugmaschine drehfest gehalten.

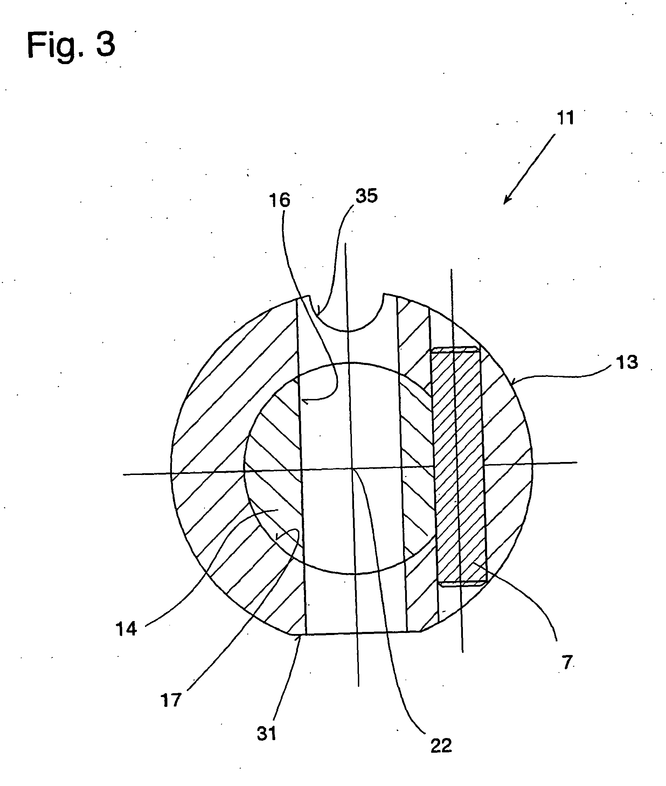

Aus Figur 3 ist ersichtlich, dass die Fixierhülse 14 drehfest in der Werkzeughülse 13 angeordnet ist. In die Fixierhülse 14 ist nämlich eine Nut 34 eingearbeitet, in die ein Fixierstift 7 zwischen der Außenkontur der Fixierhülse 14 und der Innenkontur der Werkzeughülse 13 verläuft, so dass durch den Fixierstift 7 die Fixierhülse 14 in der Werkzeughülse 13 verspannt gehalten ist. Während der Montage der Fixierhülse 13 in die Werkzeughülse 13 ist darauf zu achten, dass die Bohrungen 17 und 19 fluchtend zueinander ausgerichtet sind, durch die der Schaft 25 der Elektrode 12 einzuschieben ist.

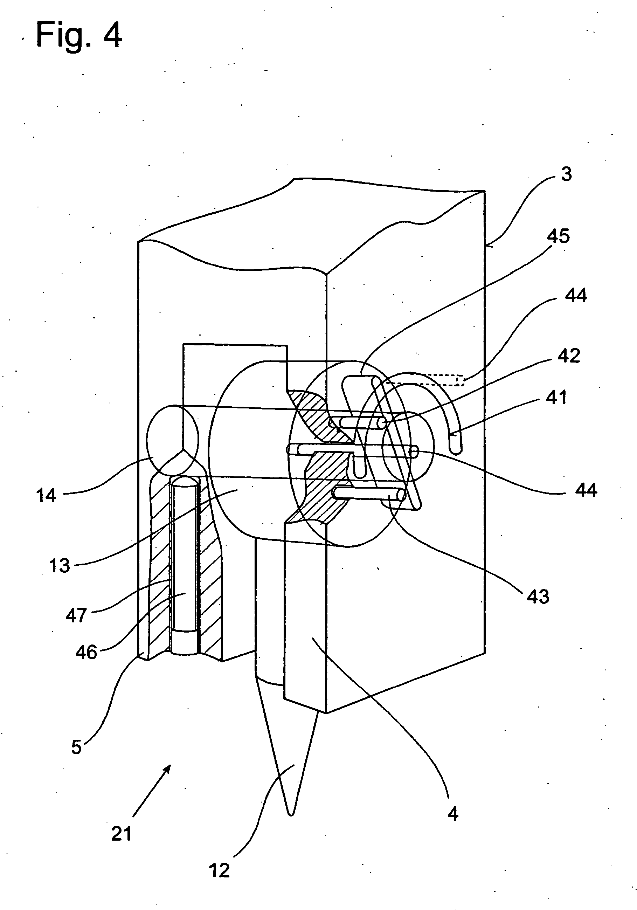

In Figur 4 ist gezeigt, dass die in der Haltevorrichtung 11 arretierte Elektrode 12 stufenlos in unterschiedliche Winkelpositionen, bezogen auf den Gehäusearm 3 ausrichtbar ist. Dies wird dadurch bewerkstellig, dass in den Schenkel 4 eine kreisbogenförmige Nut 41 eingearbeitet ist, deren Mittelpunkt auf der Längsachse 22 der Werkzeughülse 13 liegt. An der Werkzeughülse 13 ist ein Einstellstift 44 angebracht, der die Nut 41 durchgreift. Der strichliert dargestellte Einstellstift 44 befindet sich zunächst in einer Ausgangslage und kann innerhalb der Nut 41 bewegt werden. Auf der äußeren Oberfläche des Schenkels 4 sind zwei Anlagestifte 42 und 43 vorgesehen, die zusammen eine Auflageebene für ein Endmaß 45 bilden. Das Endmaß 45 wird als Quader mit unterschiedlichen Höhenabmessungen vorrätig gehalten; die Höhenabmessungen des Endmaßes 45 entsprechen der Sinuswinkelfunktion, wodurch ein beliebiger Winkel zur Ausrichtung der Elektrode 12 einstellbar ist. Zu diesem Zweck wird das Endmaß 45 auf die beiden Anlagestifte 42 und 43 aufgelegt und der Einstellstift 44 wird aus der Ausgangslage auf das Endmaß 45 verschwenkt bis dieses an diesem anliegt.

Zur Fixierung der Werkzeughülse 13 ist in dem Schenkel 5 eine Gewindebohrung 47 in die eine Madenschraube 46 eingearbeitet, in eingedreht ist. Das freie Ende der Madenschraube 46 liegt auf der Oberfläche der Fixierhülse 14 an, so dass diese durch die Madenschraube 46 in den Schenkel 5 verspannt wird.

## Patentansprüche

1. Haltevorrichtung (11), die in eine Werkzeugschiene (1) mit einen aus zwei parallel zueinander verlaufenden Schenkeln (4, 5) gebildeten Gehäusearm (3) einbaubar ist und durch die eine Elektrode (12) mit einem Schaft (25) der in einer Richtung des Halteglieds (15) mit geneigt verlaufende Druckfläche (33) und mit eine durch einen Bund oder durch Ansätze gebildete Anschlagfläche (32) versehen ist zum Erodieren von metallischen Werkstücken (2) an der Werkzeugmaschine (1) arretierbar ist, mit einer zwischen den Schenkeln (4) und (5) zur Ausrichtung der Elektrode in einer vorgegebenen Winkelstellung haltbare Werkzeughülse (13), die eine senkrecht zur Längsachse (22) der Werkzeughülse (13) verlaufende Durchgangsbohrung (16) aufweist, in die die Elektrode (12) einführbar ist, und mit einem Halteglied (15), das in eine parallel zur Längsachse (22) der Werkzeughülse (13) verlaufenden Bohrung (17) eingesetzt ist und dessen freies Ende auf die Elektrode (12) zu deren Fixierung einwirkt,
wobei an die Werkzeughülse (13) auf der dem zu bearbeitenden Werkstück (29) zugewandten Seite im Bereich der Durchgangsbohrung (16) eine plane Anlagefläche (31) angearbeitet ist, an der im montierten Zustand der Elektrode (12) die Anschlagfläche (32) der Elektrode (12) anliegt und das Halteglied (15) zur Verspannung der Elektrode (12) in der Werkzeughülse (13) auf die geneigt verlaufende Druckfläche (33) der Elektrode einwirkt.

2. Haltevorrichtung nach Anspruch 1,
**dadurch gekennzeichnet, dass**
der Abstand zwischen der Anlagefläche (31) der Werkzeughülse (13) und der Mittelachse des Haltegliedes (15) und der Abstand zwischen der Anschlagfläche (32), der Elektrode (12) und der Druckfläche (33) derart aufeinander abgestimmt sind, dass bei Anlage des Haltegliedes (15) an der Druckfläche (33) der Elektrode (12) eine Zugkraft auf diese einwirkt, durch die die Elektrode (12) spielfrei an der Anlagefläche (31) der Werkzeughülse (13) anliegt.

3. Haltevorrichtung nach Anspruch 1 oder 2,
**dadurch gekennzeichnet, dass**
das freie Ende des Haltegliedes (15) als Federraste (20, 24) ausgebildet ist und dass das Rastglied (20) mittels einer auf diese einwirkenden in das Halteglied(15) integrierter Feder (24) auf die Druckfläche (33) der Elektrode (12) angepresst ist.

4. Haltevorrichtung nach einem oder mehreren der vorgenannten Ansprüche,
**dadurch gekennzeichnet, dass**
die Druckfläche (33) der Elektrode (12) in Bezug auf die Längsachse (22) der Werkzeughülse (13) in einem Winkel von 45° geneigt ist.

5. Haltevorrichtung nach einem oder mehreren der vorgenannten Ansprüche,
**dadurch gekennzeichnet, dass**
in die Bohrung (17) der Werkzeughülse (13) eine Fixierhülse 814) eingesetzt ist, deren beiden freien Enden aus der Werkzeughülse (13) abstehen und jeweils in dem der Werkzeugmaschine zugeordneten Gehäusearm (3) drehbar gehalten wird.

6. Haltevorrichtung nach Anspruch 5,
**dadurch gekennzeichnet, dass**
in die Fixierhülse (14) eine in Richtung der Längsachse (22) der Werkzeughülse (13) verlaufende Durchgangsbohrung (18) eingearbeitet ist, in die von beiden Seiten jeweils eines der Halteglieder (15) eingeschraubt ist, und dass in der Fixierhülse (14) eine senkrecht zu der Durchgangsbohrung (18) verlaufende Bohrung (19) eingearbeitet ist, die im montierten Zustand der Fixierhülse (14) in der Werkzeughülse (13) fluchtend zu der Durchgangsbohrung (16) der Werkzeughülse (13) ausgerichtet ist.

7. Haltevorrichtung nach Anspruch 6,
**dadurch gekennzeichnet, dass**
die Fixierhülse (14) drehfest in der Werkzeughülse (13) gehalten ist.

8. Haltevorrichtung nach Anspruch 7,
**dadurch gekennzeichnet, dass**
in die Außenkontur der Fixierhülse (14) mindestens eine Nut (34) eingearbeitet ist, in die ein Fixierstift (7) einschiebbar ist, durch den die Fixierhülse (14) in der Werkzeughülse (13) verspannt gehalten ist.

9. Haltevorrichtung nach einem oder mehreren der vorgenannten Ansprüche,
**dadurch gekennzeichnet, dass**
die Außenkontur der Werkzeughülse (13) eine parallel zu deren Längsachse verlaufende Nut (35) aufweist, in die ein Fixierstift (8) einschiebbar ist, der an der Werkzeugmaschine (1) zur drehfesten Arretierung der Werkzeughülse (13) gehalten ist.

10. Haltevorrichtung nach Anspruch 9,
**dadurch gekennzeichnet, dass**
die Nut (35) auf der der Elektrode gegenüberliegenden Seite der Werkzeughülse (13) vorgesehen ist.

11. Haltevorrichtung nach Anspruch 10,
**dadurch gekennzeichnet, dass**
die Werkzeugmaschine (1) zwei parallel zueinander ausgerichtete Schenkel (4, 5) aufweist, zwischen denen und an denen die Werkzeughülse (13) drehbar abgestützt ist, das in die Schenkelarme (4, 5) eine Vielzahl von auf einer Kreisbahn ausgerichteten Bohrungen (6) eingearbeitet sind, die wechselweise fluchtend in Deckung mit der Nut (35) der Werkzeughülse (13) zur Ausrichtung der Elektrode (12) bringbar sind, und dass der Fixierstift (8) in zwei fluchtend gegenüberliegende Bohrungen (6) zur drehfesten Arretierung der Werkzeughülse (13) in den beiden Schenkeln (4, 5) abgestützt ist.

## Claims

1. Retaining device (11) which can be installed in a tool rail (1) having a housing arm (3) formed of two legs (4, 5) running parallel to one another, and by means of which an electrode (12) for eroding metal workpieces (2) can be immobilised on the machine tool (1), said electrode having a shaft (25) which is provided in a direction of the retaining member (15) with an inclined pressure surface (33) and with a stop surface (32) formed by a collar or by - shoulders, comprising a tool sleeve (13) which can be held in a predefined angular position between the legs (4) and (5) in order to orient the electrode and which has a through-bore (16) running perpendicular to the longitudinal axis (22) of the tool sleeve (13), into which through-borne the electrode (12) can be inserted, and comprising a retaining member (15) which is inserted in a bore (17) running parallel to the longitudinal axis (22) of the tool sleeve (13) and the free end of which acts on the electrode (12) in order to fix the latter, wherein a flat bearing surface (31) is formed on the tool sleeve (13) in the region of the through-bore (16) on the side facing towards the workpiece (2) to be machined, against which bearing surface the stop surface (32) of the electrode (12) bears in the installed state of the electrode (12), and the retaining member (15) acts on the inclined pressure surface (33) of the electrode in order to clamp the electrode (12) in the tool sleeve (13).

2. Retaining device according to claim 1, **characterised in that** the distance between the bearing surface (31) of the tool sleeve (13) and the central axis of the retaining member (15) and the distance between the stop surface (32) of the electrode (12) and the pressure surface (33) arc adapted to one another in such a way that, when the retaining member (15) bears against the pressure surface (33) of the electrode (12), a tensile force acts on the latter, by virtue of which the electrode (12) bears without play against the bearing surface (31) of the tool sleeve (13).

3. Retaining device according to claim 1 or 2, **characterised in that** the free end of the retaining member (15) is designed as a spring-loaded latch (20, 24), and **in that** the latching member (20) is pressed against the pressure surface (33) of the electrode (12) by means of a spring (24) acting on said latching member and integrated in the retaining member (15).

4. Retaining device according to one or more of the preceding claims, **characterised in that** the pressure surface (33) of the electrode (12) is inclined at an angle of 45° relative to the longitudinal axis (22) of the tool sleeve (13).

5. Retaining device according to one or more of the preceding claims, **characterised in that** a fixing sleeve (14) is inserted in the bore (17) of the tool sleeve (13), the two free ends of which fixing sleeve protrude from the tool sleeve (13) and are in each case rotatably held in the housing arm (3) assigned to the machine tool.

6. Retaining device according to claim 5, **characterised in that** a through-bore (18) which runs in the direction of the longitudinal axis (22) of the tool sleeve (13) is formed in the fixing sleeve (14), into which through-bore a respective one of the retaining members (15) is screwed from both sides, and **in that** a bore (19) which runs perpendicular to the through-bore (18) is formed in the fixing sleeve (14), this bore being aligned with the through-bore (16) of the tool sleeve (13) in the installed state of the fixing sleeve (14) in the tool sleeve (13).

7. Retaining device according to claim 6, **characterised in that** the fixing sleeve (14) is held in the tool sleeve (13) in a rotationally fixed manner.

8. Retaining device according to claim 7, **characterised in that** at least one groove (34) is formed in the outer contour of the fixing sleeve (14), into which groove a fixing pin (7) can be inserted, by means of which the fixing sleeve (14) is held in a clamped manner in the tool sleeve (13).

9. Retaining device according to one or more of the preceding claims, **characterised in that** the outer contour of the tool sleeve (13) has a groove (35) running parallel to the longitudinal axis thereof, into which groove there can be inserted a fixing pin (8) which is held on the machine tool (1) in order to immobilise the tool sleeve (13) in a rotationally fixed manner.

10. Retaining device according to claim 9, **characterised in that** the groove (35) is provided on the side of the tool sleeve (13) located opposite the electrode.

11. Retaining device according to claim 10, **characterised in that** the machine tool (1) has two legs (4, 5) oriented parallel to one another, between which and on which the tool sleeve (13) is rotatably supported, **in that** a plurality of bores (6) oriented on a circular path are formed in the legs (4, 5), which bores can alternately be brought into alignment with the groove (35) of the tool sleeve (13) in order to orient the electrode (1-2), and **in that** the fixing pin (8) is supported in two opposite aligned bores (6) in order to immobilise the tool sleeve (13) in the two legs (4, 5) in a rotationally fixed manner.

## Revendications

1. Dispositif de fixation (11) qui se monte dans une machine-outil (1) avec un bras de boîtier (3) formé de deux branches (4, 5) parallèles l'une à l'autre et permet de bloquer sur la machine outils une électrode (12) ayant une tige (25) avec une surface de pression (33) inclinée dans la direction de l'organe de fixation (15)et une surface de butée (32) formée par une collerette ou un épaulement, pour éroder des pièces métalliques (2) comprenant :
un manchon porte-outil (13) fixé entre les branches (4, 5) pour aligner l'électrode suivant une position angulaire prédéfinie, ce manchon ayant un perçage traversant (16) perpendiculaire à l'axe longitudinal (22) du manchon (13) recevant l'électrode (12), et
un organe de fixation (15) qui se place dans un perçage (17) parallèle à l'axe longitudinal (22) du manchon porte-outil (13) et dont l'extrémité libre agit sur l'électrode (12) pour assurer sa fixation,
le manchon porte-outil (13) ayant sur son côté tourné vers la pièce (29) à usiner, au niveau du perçage traversant (16), une surface d'appui plane (31) contre laquelle, s'appuie la surface de butée (32) de l'électrode (12) lorsque l'électrode (12) est montée, et l'organe de fixation (15) agit sur la surface de pression (33) inclinée pour serrer l'électrode (12) dans le manchon porte-outil (13).

2. Dispositif de fixation selon la revendication 1,
**caractérisé en ce que**
la distance entre la surface d'appui (31) du manchon porte-outil (13) et l'axe de l'organe de fixation (15) ainsi que la distance entre la surface d'appui (32), l'électrode (12) et la surface de pression (33), sont définies les unes par rapport aux autres pour que lorsque l'organe de fixation (15) est en appui contre la surface de pression (33) de l'électrode (12), celle-ci soit soumise à une traction qui applique l'électrode (12) sans jeu contre la surface d'appui (31) du manchon porte-outil (13).

3. Dispositif de fixation selon la revendication 1 ou 2,
**caractérisé en ce que**
l'extrémité libre de l'organe de fixation (15) est réalisée sous la forme d'un moyen d'enclipsage à ressort (20, 24), et
l'organe d'enclipsage (20) est pressé contre la surface de pression (33) de l'électrode (12) par un ressort (24) intégré dans l'organe de fixation (15) et agissant sur celui-ci.

4. Dispositif de fixation selon l'une des revendications précédentes,
**caractérisé en ce que**
la surface de pression (33) de l'électrode (12) est inclinée suivant un angle de 45° par rapport à l'axe longitudinal (22) du manchon porte-outil (13).

5. Dispositif de fixation selon l'une des revendications précédentes,
**caractérisé en ce qu'**
un manchon de fixation (14) est logé dans le perçage (17) du manchon porte-outil (13) et ses deux extrémités libres dépassent du manchon porte-outil (13), le bras de boîtier (3) associé à la machine-outil étant logé à rotation dans ce manchon.

6. Dispositif de fixation selon la revendication 5,
**caractérisé en ce qu'**
un perçage traversant (18) est usiné dans le manchon de fixation (14) dans la direction de l'axe longitudinal (22) du manchon porte-outil (13), ce perçage traversant recevant dans les deux côtés, chaque fois un organe de fixation (15), vissé, et
un perçage (19) est usiné perpendiculairement au perçage traversant (18) dans le manchon de fixation (14), et à l'état monté du manchon (13) de fixation (14), ce perçage est aligné par rapport au perçage traversant (16) du manchon porte-outil (13).

7. Dispositif de fixation selon la revendication 6,
**caractérisé en ce que**
le manchon de fixation (14) est tenu solidairement en rotation dans le manchon porte-outil (13).

8. Dispositif de fixation selon la revendication 7,
**caractérisé en ce qu'**
au moins une rainure (34) est usinée dans le contour extérieur du manchon de fixation (14), et elle reçoit une broche de fixation (7) qui maintient serré le manchon de fixation (14) dans le manchon porte-outil (13).

9. Dispositif de fixation selon l'une des revendications précédentes,
**caractérisé en ce que**
le contour extérieur du manchon porte-outil (13) comporte une rainure (35) parallèle à son axe longitudinal et dans laquelle se glisse une broche de fixation (8) tenue à la machine-outil (1) pour bloquer solidairement en rotation le manchon porte-outil (13).

10. Dispositif de fixation selon la revendication 9,
**caractérisé en ce que**
la rainure (35) est prévue sur le côté du manchon porte-outil (13) à l'opposé de l'électrode.

11. Dispositif de fixation selon la revendication 10,
**caractérisé en ce que**
la machine porte-outil (1) comporte deux branches (4, 5) alignées parallèlement, entre lesquelles et contre lesquelles le manchon porte-outil (13) s'appuie en rotation, et de nombreux perçages (6) alignés sur un cercle sont usinés dans les branches (4, 5), ces perçages étant alignés alternativement avec la rainure (35) du manchon porte-outil (13) pour aligner l'électrode (12), et
la broche de fixation (8) est appuyée dans deux perçages (6), alignés, opposés pour le blocage solidaire en rotation du manchon porte-outil (13) dans les deux branches (4, 5).
